# EUROPÄISCHE PATENTSCHRIFT

(11) **EP 3 374 213 B1**
(45) Veröffentlichungstag und Bekanntmachung des Hinweises auf die Patenterteilung: **17.07.2019**
(21) Anmeldenummer: 16791641.0
(22) Anmeldetag: 09.11.2016
(51) Int. Cl.: B60G 17/027, B60G 15/06

(54) **KRAFTFAHRZEUG-FAHRGESTELL**
MOTOR VEHICLE CHASSIS
CHÂSSIS DE VÉHICULE AUTOMOBILE

(30) Priorität: 13.11.2015 DE 102015119638
(43) Veröffentlichungstag der Anmeldung: 19.09.2018
(73) Patentinhaber: Hoerbiger Automotive Komfortsysteme GmbH, 86956 Schongau (DE)
(72) Erfinder: STOLLE, Klaus, 86972 Schwabniederhofen (DE)
(74) Vertreter: Grättinger Möhring von Poschinger Patentanwälte Partnerschaft
(86) Internationale Anmeldenummer: PCT/EP2016/077156
(87) Internationale Veröffentlichungsnummer: WO 2017/081090

(56) Entgegenhaltungen:
- EP-A1- 0 857 871
- EP-A2- 1 236 591
- WO-A2-2016/180590
- DE-A1- 19 855 310
- DE-A1-102005 010 098
- US-A1- 2014 306 409

## Beschreibung

Die vorliegende Erfindung betrifft ein Kraftfahrzeug-Fahrgestell, umfassend eine Basisstruktur und mehrere mit dieser über jeweils eine Radaufhängung verbundene Räder.

Bei Kraftfahrzeug-Fahrgestellen umfassen die Radaufhängungen, über welche die Räder mit der Basisstruktur verbunden sind, üblicherweise eine Feder sowie einen Stoßdämpfer. Bekannt sind dabei unterschiedliche Möglichkeiten, was die Ausführung der Feder (z. B. Schraubenfedern, Blattfedern, Torsionsfedern) sowie deren räumliche Anordnung in Bezug zu den übrigen Komponenten der Radaufhängung, namentlich relativ zu dem jeweils zugeordneten Stoßdämpfer angeht. Eine insbesondere bei lenkbaren (Vorder-)Rädern verbreitet eingesetzte Variante bilden sog. McPherson-Federbeine, bei denen ein Stoßdämpfer innerhalb einer als Schraubenfeder ausgeführten Feder angeordnet ist. Insbesondere bei nicht-lenkbaren (Hinter-)Rädern sind demgegenüber im erheblichen Umfang Radaufhängungen anzutreffen, bei denen ein Stoßdämpfer außerhalb einer - als Schraubenfeder ausgeführten - Feder, d. h. mehr oder weniger weit entfernt neben dieser angeordnet ist.

Es ist weiterhin bekannt, Kraftfahrzeuge mit einer Höhen-Verstelleinrichtung auszustatten, um bei Bedarf (z. B. beim Befahren von Rampen oder dergl.) die Bodenfreiheit erhöhen bzw. die Basisstruktur (z. B. zur Kraftstoffeinsparung bei Autobahnfahrt) absenken zu können. Typischerweise, wenngleich nicht zwingend, greift dabei die betreffende Höhen-Verstelleinrichtung in einen der Fußpunkte der Feder der betreffenden Radaufhängung ein und verändert dessen Lage, wobei prinzipiell nicht entscheidend ist, ob der der Basisstruktur oder aber der dem betreffenden Rad zugeordnete Federfußpunkt verstellt wird. Neben pneumatischen und elektrischen Federfußpunkt-Verstellantrieben (vgl. z.B. DE 102007051971 B4) sind insbesondere auch hydraulische Federfußpunkt-Verstellantriebe bekannt, beispielsweise aus der DE 3223195 A1, der DE 102009047100 A1, der US 5181696 A, der EP 2301773 A1, der JP 2010-149550 A und der WO 2014/142160 A1. Eine der jeweiligen Radaufhängung zugeordnete hydraulische Zylinder-Kolben-Anordnung wird dabei gesteuert von einem Hydraulikaggregat mit Hydraulikfluid beaufschlagt. Dabei kann für mehrere Radaufhängungen ein gemeinsames, zentrales Hydraulikaggregat vorgesehen sein; oder aber es können mehrere einzelne, dezentrale, der jeweiligen Radaufhängung zugeordnete Hydraulikaggregate vorgesehen sein, welche jeweils nur eine einzige hydraulische Zylinder-Kolben-Anordnung beaufschlagen. Einen solchen hydraulischen Federfußpunkt-Verstellantrieb offenbart, als Teil eines KFZ-Federbeins mit verstellbarer Vorspannung, beispielsweise die DE 10109555 A1. Das Dokument DE 10 2005 010 098 A1 offenbart ein Kraftfahrzeug-Fahrgestell gemäß dem Oberbegriff des Anspruchs 1.

Im Lichte des vorstehend aufgezeigten Standes der Technik ist die vorliegende Erfindung darauf gerichtet, ein Kraftfahrzeug-Fahrgestell der eingangs angegebenen Art bereitzustellen, bei welchem zu vergleichsweise geringen Kosten und unter Beanspruchung eines besonders geringen Bauraumes für die hydraulische Höhen-Verstelleinrichtung eine betriebssichere und leistungsfähige Möglichkeit zur Verstellung der Höhe des Fahrwerks über der Fahrbahn realisiert ist.

Gemäß der vorliegenden Erfindung wird, wie in Anspruch 1 angegeben, diese Aufgabe gelöst durch ein Kraftfahrzeug-Fahrgestell, umfassend eine Basisstruktur, zwei mit dieser über jeweils eine Vorderradaufhängung verbundene Vorderräder und zwei mit dieser über jeweils eine Hinterradaufhängung verbundene Hinterräder, wobei jede der beiden Vorderradaufhängungen mindestens eine dem betreffenden Vorderrad zugeordnete Feder und mindestens einen dem betreffenden Vorderrad zugeordneten Stoßdämpfer in einer ersten Feder-Stoßdämpfer-Anordnung und jede der beiden Hinterradaufhängungen mindestens eine dem betreffenden Hinterrad zugeordnete Feder und mindestens einen dem betreffenden Hinterrad zugeordneten Stoßdämpfer in einer sich von der ersten Feder-Stoßdämpfer-Anordnung unterscheidenden zweiten Feder-Stoßdämpfer-Anordnung aufweist, mit den folgenden Merkmalen:
sämtlichen vier Radaufhängungen ist jeweils eine hydraulische Höhen-Verstelleinrichtung mit einer auf einen Fußpunkt der betreffenden Feder einwirkenden Zylinder-Kolben-Anordnung zugeordnet;
die Zylinder-Kolben-Anordnung ist jeweils von einem dem betreffenden Rad zugeordneten dezentralen, jeweils eine durch einen Elektromotor angetriebene Hydraulikpumpe umfassenden Hydraulikaggregat beaufschlagbar;
jede hydraulische Höhen-Verstelleinrichtung umfasst eine komplexe, integrierte, das jeweilige Hydraulikaggregat und die zugeordnete Zylinder-Kolben-Anordnung umfassende elektro-hydraulische Verstell-Baugruppe mit einem spezifischen Adapter, in welchen die jeweilige Zylinder-Kolben-Anordnung dergestalt integriert ist, dass zwischen der jeweiligen Hydraulikpumpe und der zugeordneten Zylinder-Kolben-Anordnung keinerlei freiliegende Hydraulikleitungen existieren;
die Zylinder-Kolben-Anordnung umfasst jeweils einen ringförmigen hydraulischen Arbeitsraum;
zu dem ringförmigen hydraulischen Arbeitsraum der Zylinder-Kolben-Anordnung axial versetzt ist ein sein Volumen gegenläufig zum ringförmigen Arbeitsraum verändernder ringförmiger Hydraulikflüssigkeits-Vorratsbehälter angeordnet;
die hydraulischen Höhen-Verstelleinrichtungen der Vorderräder und die hydraulischen Höhen-Verstelleinrichtungen der Hinterräder unterscheiden sich hinsichtlich der Adapter.

In Umsetzung der vorliegenden Erfindung lässt sich ein vier - jeweils über eine zugeordnete Radaufhängung mit einer Basisstruktur verbundene - Räder aufweisendes Kraftfahrzeug-Fahrgestell bereit stellen, das trotz unterschiedlich konzipierter Radaufhängungen für die Vorder- und die Hinterräder zu vergleichsweise geringen Kosten eine vollwertige, sämtliche vier Räder erfassende Fahrwerks-Höhenverstellung aufweist, welche durch die hydraulische Wirkungsweise sehr kompakt und aufgrund der dezentralen, dem jeweiligen Rad zugeordneten Hydraulikaggregate trotzdem hochdynamisch, betriebssicher und leistungsfähig ist. Um die Basisstruktur anzuheben, wird mittels der Hydraulikaggregate Hydraulikflüssigkeit (aus jeweils einem zugeordneten Hydraulikflüssigkeits-Vorratsbehälter) in die hydraulischen Arbeitsräume der vier Zylinder-Kolben-Anordnungen gepumpt; zum Absenken der Basisstruktur (infolge von dessen Eigengewicht) genügt es typischerweise, einen Rückströmungsweg zwischen dem jeweiligen hydraulischen Arbeitsraum und dem zugeordneten (typischerweise belüfteten, d. h. unter Umgebungsdruck stehenden) Hydraulikflüssigkeits-Vorratsbehälter zu öffnen (vgl. DE 102014018788), wobei alternativ aber auch eine aktive Rückförderung mittels des Hydraulikaggregats in Betracht kommt. Dass der dem jeweiligen Hydraulikaggregat zugeordnete (typischerweise belüftete, d. h. drucklose) ringförmige Hydraulikflüssigkeits-Vorratsbehälter, welcher bevorzugt ebenfalls dergestalt in den Adapter integriert ist, dass zwischen ihm und der zugeordneten Hydraulikpumpe keinerlei freiliegende Leitungen existieren, ein gegensinnig zum Volumen des hydraulischen Arbeitsraumes der Zylinder-Kolben-Anordnung veränderbares Volumen aufweist, trägt dazu bei, den Bauraum zu minimieren. Ganz besonders kompakt können die Höhenverstelleinrichtungen dann sein, wenn die Querschnittsflächen des jeweiligen Arbeitsraumes und des jeweils zugeordneten Hydraulikflüssigkeits-Vorratsbehälters identisch sind; denn in diesem Falle bedarf es nur eines minimalen (dem Ersatz möglicher Leckagen dienenden) Ausgleichsvolumens, weil sich bei einer Betätigung der Höhen-Verstelleinrichtung das Volumen des Hydraulikflüssigkeits-Vorratsbehälters exakt um das gleiche Maß reduziert wie das des hydraulischen Arbeitsraumes zunimmt bzw. umgekehrt. Der weitgehende Wegfall eines über den Hydraulikflüssigkeits-Vorratsbehälter hinausgehenden Ausgleichsvolumens gestattet die Realisierung eines ganz besonders kompakten Systems.

Im Hinblick auf die Herstellungskosten für das erfindungsgemäße Kraftfahrzeug-Fahrgestell ist von erheblicher Bedeutung, dass trotz unterschiedlich konzipierter Radaufhängungen der Vorder- und der Hinterräder an diesen hydraulische Höhen-Verstelleinrichtungen zum Einsatz kommen können, die im erheblichen Umfang identische Komponenten beinhalten. Namentlich können - in kostenmindernder Weise - für die Vorderrad-Höhenverstelleinrichtungen und die Hinterrad-Höhenverstelleinrichtungen identische Hydraulikaggregate zum Einsatz kommen, indem sich die betreffenden Höhen-Verstelleinrichtungen allein durch spezifische Adapter unterscheiden, von denen die einen auf die spezifische Vorderrad-Aufhängung abgestimmt sind und die anderen auf die spezifische Hinterrad-Aufhängung. In diesem Sinne sind erfindungsgemäß mit Ausnahme des jeweiligen Adapters die hydraulischen Höhen-Verstelleinrichtungen der Vorderräder und die hydraulischen Höhen-Verstelleinrichtungen der Hinterräder baugleich.

Die vorliegende Erfindung stellt nicht nur ein besonders wirtschaftliches und kostengünstiges Höhenverstellkonzept innerhalb eines Fahrzeugs mit konzeptionell unterschiedlich gestalteten Vorderrad- und Hinterradaufhängungen bereit. Vielmehr ergeben sich in Anwendung der vorliegenden Erfindung auch (und erst recht) fahrzeugübergreifend wirtschaftliche Vorteile. Denn das der Erfindung zugrundeliegende technische Konzept ermöglicht auch, mit entsprechenden Kostenvorteilen, die weitgehende Verwendung von Gleichteilen an unterschiedlichen Fahrzeugen, indem jeweils allein fahrzeugspezifische Adapter zum Einsatz kommen. Dies stellt einen bedeutenden Nutzen gegenüber den aus dem Stand der Technik bekannten Systemen dar, bei denen jeweils die komplette Höhenverstelleinrichtung als Ganzes fahrzeugindividuell auszuführen ist.

Besonders bevorzugt umfasst dabei der jeweilige Adapter einen Grundkörper, welcher seinerseits einen Gehäuseabschnitt und einen darin aufgenommenen, von dem Gehäuseabschnitt umschlossenen Adapterkern aufweist, und einen relativ zu dem Grundkörper bewegbaren, auf den jeweiligen Federfußpunkt einwirkenden Betätigungsabschnitt. Bei dieser Bauweise des jeweiligen Adapters kann zu einer ganz besonders kompakten Bauweise beitragen, wenn sowohl der ringförmige hydraulische Arbeitsraum als auch der ringförmige Hydraulikflüssigkeits-Vorratsbehälter - axial zueinander versetzt - zwischen dem Gehäuseabschnitt des Adapter-Grundkörpers und dem auf oder in diesem verschiebbar geführten Betätigungsabschnitt ausgeführt sind. Im Sinne einer Maximierung der durch die vorliegende Erfindung erzielbaren Vorteile (s. o.) sind dabei besonders bevorzugt sogar die Adapter der hydraulischen Höhen-Verstelleinrichtungen der Vorderräder und die Adapter der hydraulischen Höhen-Verstelleinrichtungen der Hinterräder teilweise zueinander baugleich, insbesondere indem sie über identische Adapterkerne verfügen. Die Adapter der Vorderrad-Höhenverstelleinrichtungen und der Hinterrad-Höhenverstelleinrichtungen unterscheiden sich in diesem Falle im Wesentlichen (nur) durch die verschieden ausgeführten Gehäuseabschnitte der Grundkörper und die verschieden ausgeführten Betätigungsabschnitte.

In den Adapterkernen kann dabei besonders bevorzugt die Ventiltechnik (vollständig oder zumindest überwiegend) untergebracht sein, so dass sich die erzielbaren Wirtschaftlichkeits-Vorteile insbesondere auch auf die - mit einem hohen Kostenanteil verbundene - Ventiltechnik beziehen. Gemäß einer abermals besonders bevorzugten, unter Gesichtspunkten der Wirtschaftlichkeit besonders vorteilhaften Weiterbildung der Erfindung ist jeweils in den Adapter das Gehäuse der zugeordneten Hydraulikpumpe dergestalt integriert, dass der Pumpenrotor in einem in dem Adapter ausgeführten Hohlraum rotiert, namentlich indem der Pumpenhohlraum in einem - für die Vorderrad-Höhenverstelleinrichtungen und die Hinterrad-Höhenverstelleinrichtungen identischen - Adapterkern des jeweiligen Adapters untergebracht ist.

Der Adapterkern ist bevorzugt zylindrisch ausgeführt und dichtend in einem korrespondierenden zylindrischen Hohlraum des Gehäuseabschnitts des Adapter-Grundkörpers fixiert. Insbesondere können der Adapterkern und der Gehäuseabschnitt mittels eines Schrumpfverfahrens dauerhaft fest und dicht miteinander verbunden sein. Durch die Integration von Fluidkanälen in die Trennfläche von Adapterkern und Gehäuseabschnitt, indem auf der Umfangsfläche des Adapterkerns Nuten existieren, welche durch die korrespondierende Innenfläche des Hohlraumes des Gehäuseabschnitts abgedeckt sind, lassen sich selbst schaltungstechnisch komplexe Hydraulikschaltungen auf minimalem Bauraum unterbringen. Dies ermöglicht besonders kompakte Strukturen. Dies wiederum ist ein zentraler Aspekt für die - gemäß einer bevorzugten Weiterbildung der Erfindung vorgesehene - Unterbringung entscheidender Teile der Höhenverstelleinrichtung innerhalb der als Schraubenfeder ausgeführten Feder der jeweiligen Radabstützung.

Nach der Erfindung ist bei der zweiten Feder-Stoßdämpfer-Anordnung jeweils die Feder als Schraubenfeder ausgeführt und der Stoßdämpfer außerhalb der Feder angeordnet, wobei zumindest der Elektromotor des Hydraulikaggregats innerhalb der Feder angeordnet ist. Bei solchen Radaufhängungen, bei denen der jeweilige Stoßdämpfer außerhalb einer als Schraubenfeder ausgeführten Feder, d. h. mehr oder weniger weit neben dieser angeordnet ist, ist besonders bevorzugt zumindest ein Teil des Hydraulikaggregats, namentlich dessen Elektromotor, innerhalb der Schraubenfeder angeordnet. Dies gestattet besonders kompakte und trotzdem leistungsfähige und zuverlässige Höhenverstelleinrichtungen. In bevorzugter Weiterbildung der Erfindung umfasst die hydraulische Zylinder-Kolben-Anordnung in diesem Falle einen ringförmigen hydraulischen Arbeitsraum, welcher besonders bevorzugt den Elektromotor des Hydraulikaggregats und/oder dessen Hydraulikpumpe umgibt, so dass besonders bevorzugt somit auch der ringförmige hydraulische Arbeitsraum der Zylinder-Kolben-Anordnung (zumindest teilweise) innerhalb der Schraubenfeder angeordnet ist. Letztere kann auf diese Weise auch die Zylinder-Kolben-Anordnung vor einer mechanischen Beschädigung schützen, was wiederum im Hinblick auf die Zuverlässigkeit des Systems einen unschätzbaren Vorteil darstellt. Im Sinne der bereits weiter oben dargelegten Gesichtspunkte ist dabei bevorzugt ein (ebenfalls) ringförmig ausgeführter Hydraulikflüssigkeits-Vorratsbehälter vorgesehen, welcher besonders bevorzugt (auch) innerhalb der Schraubenfeder angeordnet ist.

Nach der Erfindung ist auch bei der ersten Feder-Stoßdämpfer-Anordnung die Feder als Schraubenfeder ausgeführt, wobei in diesem Falle allerdings jeweils der Stoßdämpfer innerhalb der Feder und das Hydraulikaggregat außerhalb der Feder angeordnet ist. Der Gehäuseabschnitt des Grundkörpers des Adapters umfasst in diesem Falle besonders bevorzugt einen seitlichen Ansatz, an welchem der Betätigungsabschnitt - seitwärts zum Hydraulikaggregat versetzt - verschiebbar geführt ist. Auch in diesem Falle sind besonders bevorzugt die weiter oben bereits erläuterten strukturellen Merkmale (ringförmiger hydraulischer Arbeitsraum und hierzu axial versetzter, sein Volumen gegenläufig zum hydraulischen Arbeitsraum verändernder ringförmiger Hydraulikflüssigkeit-Vorratsbehälter, beide in diesem Falle den Stoßdämpfer umgebend, wobei keinerlei freiliegende Hydraulikleitungen existieren) realisiert.

Ungeachtet dessen, dass die hier definierte Erfindung sich auf die aufeinander bezogene Gestaltung der hydraulischen Höhen-Verstelleinrichtungen der Vorderradsowie der Hinterradaufhängungen eines Kraftfahrzeug-Fahrgestells bezieht, umfasst die Offenbarung ersichtlich insbesondere auch die einzelnen isolierten hydraulischen Höhen-Verstelleinrichtungen sowie die hiermit ausgestatteten einzelnen Radaufhängungen. Die Anmelderin behält sich vor, insbesondere in Ausübung des Teilungsrechts auch für die isolierten, jeweils mit einer hydraulischen Höhen-Verstelleinrichtungen ausgestatteten Radaufhängungen Schutz zu beanspruchen, namentlich für die hier offenbarte Ausführung der Vorderradaufhängung.

Im Folgenden wird die vorliegende Erfindung anhand in der Zeichnung veranschaulichter bevorzugter Ausführungsbeispiele näher erläutert. Die Zeichnung zeigt dabei, nachdem es für das Verständnis der vorliegenden Erfindung nur hierauf, nicht indessen auf die - hinreichend bekannten - sonstigen Ausführungsmerkmale des betreffenden Kraftfahrzeug-Fahrgestells ankommt, nur - jeweils in einer Detailansicht - die Höhen-Verstelleinrichtung einer Radaufhängung. Es zeigt
- Fig. 1: einen Vertikalschnitt durch eine bei einer zweiten Feder-Stoßdämpfer-Anordnung vorgesehene Höhenverstelleinrichtung in einer ersten Konfiguration, welche der maximal abgesenkten Lage des Fahrgestells entspricht,
- Fig. 2: die Höhenverstelleinrichtung nach Fig. 1 in einer zweiten, der maximal angehobenen Lage des Fahrgestells entsprechenden Konfiguration,
- Fig. 3: die Höhenverstelleinrichtung nach den Figuren 1 und 2 in einer schematisierten Explosionsdarstellung mit geschnittenem Gehäuseabschnitt des Adapter-Grundkörpers und Betätigungsabschnitt,
- Fig. 4: die Konfiguration nach Fig. 3 in nicht geschnittener Explosionsansicht,
- Fig. 5: in einer Fig. 4 entsprechenden Darstellung eine bei einer ersten Feder-Stoßdämpfer-Anordnung vorgesehene Höhenverstelleinrichtung und
- Fig. 6: in vergrößerter Darstellung die übereinstimmend bei der Höhenverstelleinrichtung nach den Figuren 3 und 4 sowie bei der Höhenverstelleinrichtung nach Fig. 5 zum Einsatz kommende Komponente.

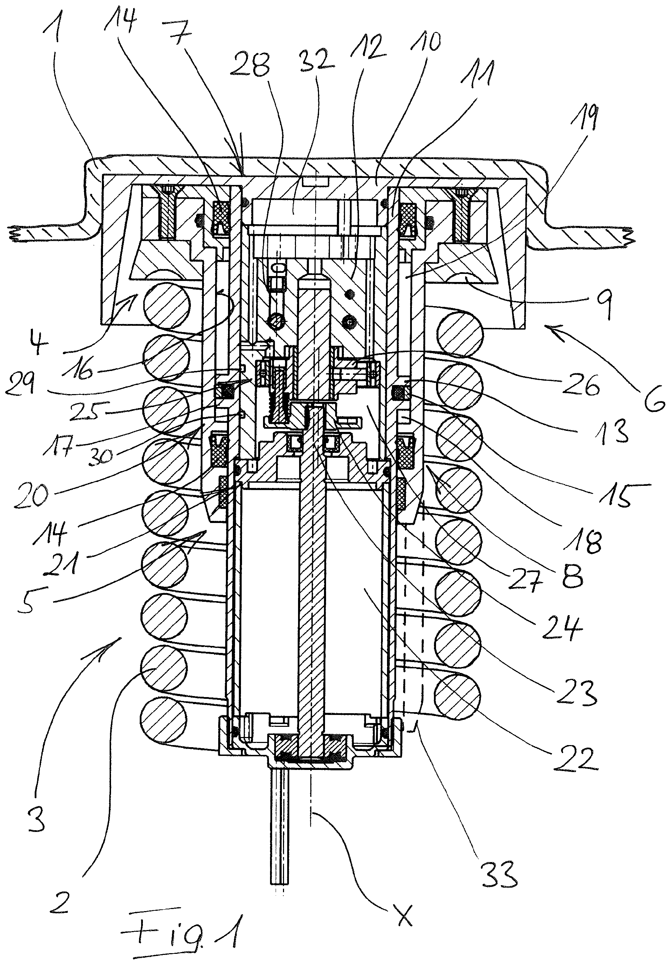

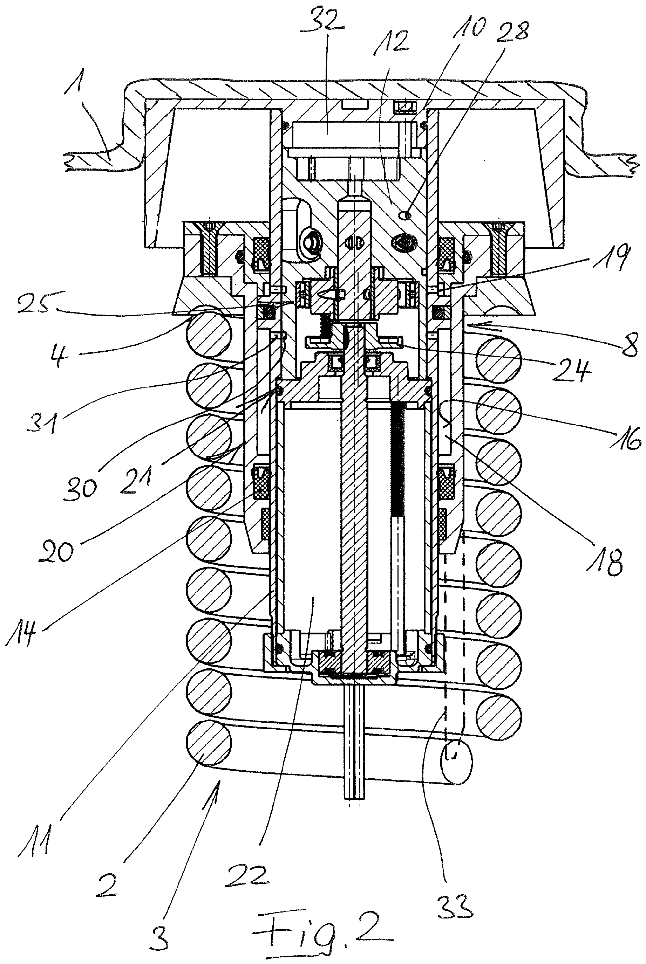

Die in den Fig. 1 und 2 der Zeichnung veranschaulichte Höhen-Verstelleinrichtung ist Teil eines als solches dem allgemein bekannten Stand der Technik entsprechenden (und daher nicht gezeigten) Kraftfahrzeug-Fahrgestells, welches eine Basisstruktur 1 und mehrere mit dieser über jeweils eine Radaufhängung verbundene Räder umfasst. Zumindest jene Radaufhängung, der die in der Zeichnung gezeigte Radaufhängung zugeordnet ist, weist eine als Schraubenfeder 2 ausgeführte Feder 3 und einen außerhalb der Feder 3 angeordneten (nicht gezeigten) Stoßdämpfer auf.

Die gezeigte hydraulische Höhen-Verstelleinrichtung wirkt dergestalt auf den oberen Fußpunkt 4 der Schraubenfeder 2 ein, dass der Abstand des oberen Fußpunktes 4 der Schraubenfeder 2 zur Basisstruktur 1 des Kraftfahrzeug-Fahrgestells veränderbar ist. Hierzu ist die hydraulische Höhen-Verstelleinrichtung als eine komplexe Verstell-Baugruppe 5 ausgeführt. Diese umfasst einen Adapter 6, welcher seinerseits namentlich einen Grundkörper 7 und einen auf diesem verschiebbar geführten Betätigungsabschnitt 8 umfasst. Während der Grundkörper 7 des Adapters 6 mit der Basisstruktur 1 des Fahrgestells verbunden ist, weist der Betätigungsabschnitt 8 eine Federauflage 9 auf, an welcher sich die Schraubenfeder 2 im Bereich ihres oberen Fußpunktes 4 abstützt.

Der Grundkörper 7 des Adapters 6 umfasst als Hauptkomponenten einen der Verbindung mit der Basisstruktur 1 dienenden Stützteller 10, einen Gehäuseabschnitt 11 und einen darin aufgenommenen Adapterkern 12. Der Gehäuseabschnitt 11 weist eine durch einen Bund 13 in einen oberen Bereich und einen unteren Bereich unterteilte zylindrische Oberfläche auf. Auf dieser ist der (dreiteilige) Betätigungsabschnitt 8 längs der Achse X verschiebbar geführt, und zwar mittels der Dichtungen 14 oben und unten abgedichtet. Der auf dem Gehäuseabschnitt 11 ausgeführte Bund 13 ist mittels der in eine umlaufende Nut eingelegten Ringdichtung 15 gegenüber der zylindrischen Innenfläche 16 des Betätigungsabschnitts 8 abgedichtet. Er stellt einen Ringkolben 17 dar, welcher gemeinsam mit der inneren Oberfläche 16 des Betätigungsabschnitts 8 und der äußeren Oberfläche des Gehäuseabschnitts 11 in dessen unteren und dessen oberen Bereich einerseits einen ringförmigen hydraulischen Arbeitsraum 18 und andererseits einen ringförmigen Hydraulikflüssigkeits-Vorratsbehälter 19 definiert. In diesem Sinne bilden die miteinander zusammenwirkenden Bereiche des Gehäuseabschnitts 11 des Adapters 6 einerseits und des Betätigungsabschnitts 8 andererseits eine hydraulische Zylinder-Kolben-Anordnung 20 aus.

Der Beaufschlagung der hydraulischen Zylinder-Kolben-Anordnung 20 der hydraulischen Höhen-Verstelleinrichtung dient das Hydraulikaggregat 21. Dieses umfasst den innerhalb des Gehäuseabschnitts 11 angeordneten Elektromotor 22 und die von diesem über die - mit der Motorwelle 23 verbundene - Kupplung 24 angetriebene, als Radialkolbenpumpe ausgeführte Hydraulikpumpe 25. Das Pumpengehäuse der Hydraulikpumpe 25 ist in den Adapter 6 integriert, indem der Rotor 26 der Hydraulikpumpe in einem in dem Adapterkern 12 ausgeführten Aufnahmehohlraum untergebracht 27 ist. Der Anschluss der Hydraulikpumpe 25 an das hydraulische System erfolgt über in dem Adapterkern 12 ausgeführte Hydraulikleitungen bzw. - bohrungen 28 sowie auf der Oberfläche des Adapterkerns 12 ausgeführte Nuten 29, welche gemeinsam mit der Innenfläche des den Adapterkern 12 umgebenden Gehäuseabschnitts 11 hydraulische Strömungskanäle 30 definieren. An diese Strömungskanäle 30 sind über den Gehäuseabschnitt 11 durchsetzende Bohrungen 31 einerseits der ringförmige hydraulische Arbeitsraum 18 und andererseits der ringförmige Hydraulikflüssigkeits-Vorratsbehälter 19 angeschlossen.

Indem der Hydraulikflüssigkeits-Vorratsbehälter 19 ein gegensinnig zum Volumen des hydraulischen Arbeitsraumes 18 der Zylinder-Kolben-Anordnung 20 veränderbares Volumen aufweist, wobei - infolge der beiderseits identischen Stirnfläche des Ringkolbens 17 - die Summe der Volumina von Hydraulikflüssigkeits-Vorratsbehälter 19 und hydraulischem Arbeitsraum 18 konstant ist, wird zum Anheben des Fahrwerks Hydraulikflüssigkeit aus dem ringförmigen Hydraulikflüssigkeits-Vorratsbehälter 19 mittels der Hydraulikpumpe 25 direkt und unmittelbar in den hydraulischen Arbeitsraum 18 gefördert. Für das Absenken des Fahrwerks (allein aufgrund des Fahrzeuggewichts) wird ein Rückströmungsweg zwischen dem hydraulischen Arbeitsraum 18 und dem ringförmigen Hydraulikflüssigkeits-Vorratsbehälter 19 geöffnet. Eine hierzu geeignete hydraulische Schaltung ist beispielsweise Gegenstand des deutschen Patents 102014018788. Die erforderliche Ventiltechnik, beispielsweise das mindestens eine dem Halten des Fahrwerks auf der eingestellten Höhe dienende Rückschlagventil, ist in dem Adapterkern 12 untergebracht. Infolge der direkten Strömung von Hydraulikflüssigkeit aus dem ringförmigen Hydraulikflüssigkeits-Vorratsbehälter 19 in den ringförmigen hydraulischen Arbeitsraum 18 (und umgekehrt), ist ein Ausgleichsraum für Hydraulikflüssigkeit nicht erforderlich. Der durch den Adapterkern 12, den Gehäuseabschnitt 11 und den Stützteller 10 begrenzte Raum 32 stellt daher allein ein Hydraulikflüssigkeits-Reservoir dar, aus welchem heraus eine allfällige Leckage ersetzt wird.

Die besondere Anordnung der vorstehend angesprochenen Teile und Komponenten der hydraulischen Höhen-Verstelleinrichtung ist der Zeichnung unmittelbar entnehmbar. Namentlich ist ersichtlich, dass der Elektromotor 22 des Hydraulikaggregats 21 ebenso innerhalb der Schraubenfeder 2 angeordnet ist wie der ringförmige hydraulische Arbeitsraum 18, der im Übrigen - jedenfalls bei angehobenem Fahrwerk - den Elektromotor 22 des Hydraulikaggregats 21 umgibt. Der - ebenfalls innerhalb der Schraubenfeder 2 angeordnete - ringförmige Hydraulikflüssigkeits-Vorratsbehälter 19 umgibt demgegenüber die Hydraulikpumpe 25. Ebenfalls ist erkennbar, dass bei der gezeigten elektro-hydraulischen Verstell-Baugruppe die Zylinder-Kolben-Anordnung 20 dergestalt in den Adapter 6 integriert ist, dass zwischen der Hydraulikpumpe 25 und der Zylinder-Kolben-Anordnung 20 keinerlei freiliegende Hydraulikleitungen existieren.

Mit gestrichelten Linien ist schließlich (aus Gründen der Übersichtlichkeit nur einseitig) angedeutet, dass der Betätigungsabschnitt 8 nach unten rohrförmig verlängert werden kann, wodurch ein das Hydraulikaggregat 21 außen umgebendes Schutzrohr 33 entsteht.

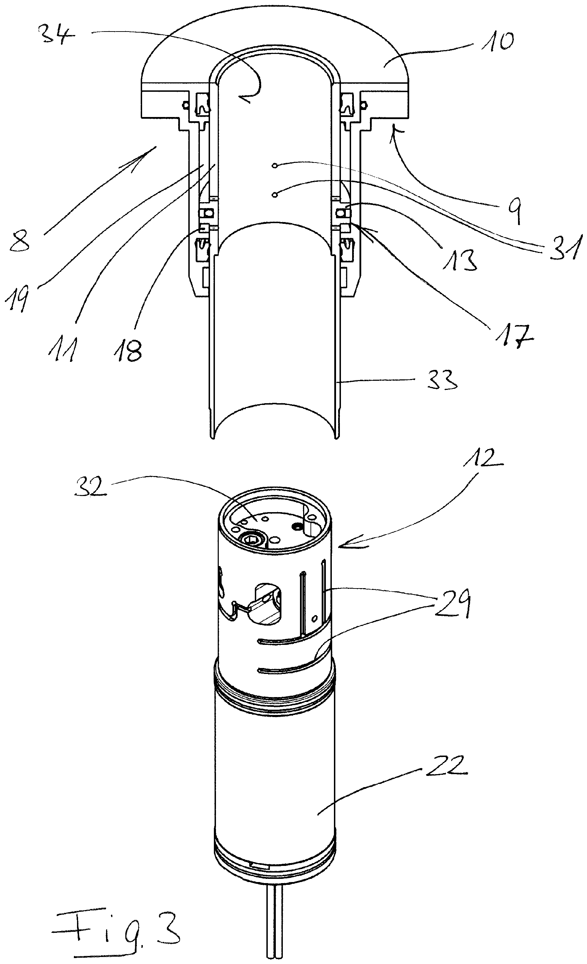

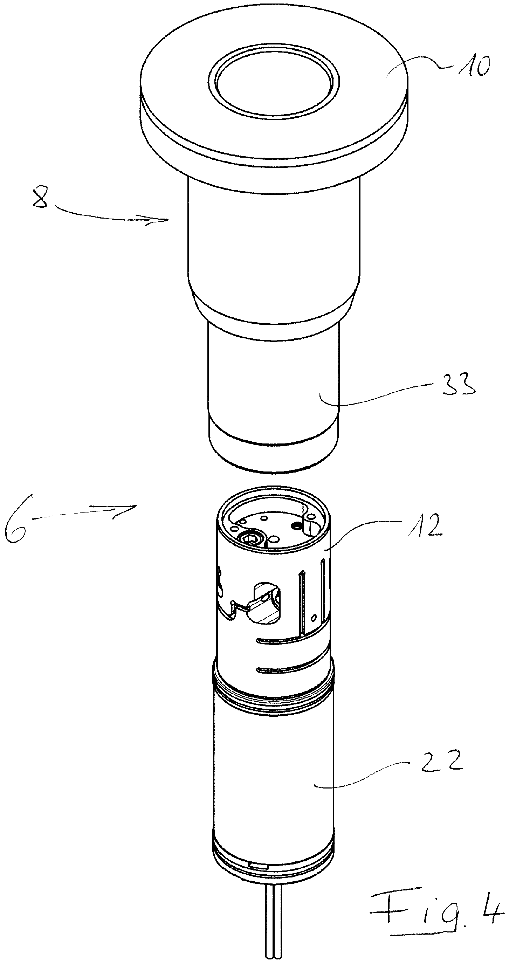

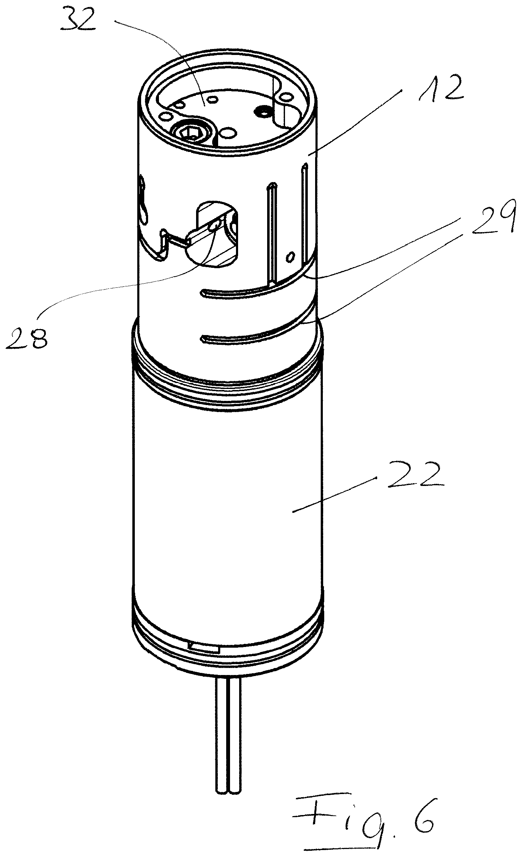

Im Hinblick auf das Verständnis der schematisiert veranschaulichten Höhenverstelleinrichtung nach den Fig. 3 und 4 ist auf die Erläuterungen zu den Fig. 1 und 2 zu verweisen. Gut erkennbar (vgl. auch Fig. 6) sind bei dieser Darstellung die außen an dem (zylindrischen) Adapterkern 12 vorgesehenen Nuten 29, welche - bei montierter Höhenverstelleinrichtung - zusammen mit der (zylindrischen) Innenfläche 34 des Gehäuseabschnitts 11 des Adapter-Grundkörpers Strömungskanäle 30 begrenzen und definieren, mit denen - über die Bohrungen 31 - der hydraulische Arbeitsraum 18 und der Hydraulikflüssigkeits-Vorratsbehälter 19 kommunizieren.

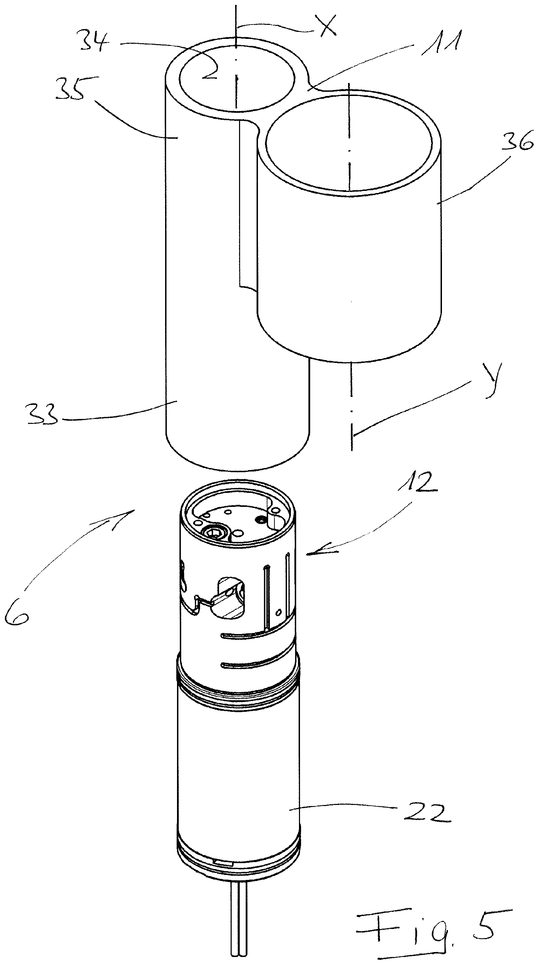

Bei der für eine erste Feder-Stoßdämpfer-Anordnung, welche sich durch die Positionierung des Stoßdämpfers innerhalb der als Schraubenfeder ausgeführten Feder auszeichnet, konzipierten Höhenverstelleinrichtung nach Fig. 5 kommt der identische Adapterkern 12 und das identische Hydraulikaggregat (vgl. Fig. 6) zum Einsatz wie bei der Höhenverstelleinrichtung nach den Figuren 3 und 4. Der Gehäuseabschnitt 11 des Adapter-Grundkörpers sowie der Betätigungsabschnitt 8 unterscheiden sich indessen gegenüber der Höhenverstelleinrichtung nach den Figuren 3 und 4. Und zwar umfasst bei der Höhenverstelleinrichtung nach Fig. 5 der Gehäuseabschnitt 11 des Adapter-Grundkörpers zwei fest miteinander verbundene Rohrabschnitte, nämlich einerseits einen ersten Rohrabschnitt 35, welcher den Adapterkern 12 aufnimmt und umschließt und nach unten hin (zum Schutzrohr 33) verlängert ist, um auch den Elektromotor 22 des Hydraulikaggregats schützend zu umgeben, und andererseits einen - gegenüber dem ersten Rohrabschnitt 35 etwas kürzeren und weiteren - zweiten Rohrabschnitt 36. In diesem ist der nicht dargestellte zylindrische Betätigungsabschnitt längs der Achse Y verschiebbar aufgenommen, wobei im Bereich der Trennfläche zwischen dem zweiten Rohrabschnitt 36 und dem Betätigungsabschnitt wiederum - entsprechend der Ausführungsform nach den Figuren 3 und 4 - ein ringförmiger hydraulischer Arbeitsraum und - axial zu diesem versetzt - ein sein Volumen gegenläufig zu diesem verändernder ringförmiger Hydraulikflüssigkeits-Vorratsbehälter untergebracht sind. Der ringförmige hydraulische Arbeitsraum sowie der ringförmige Hydraulikflüssigkeits-Vorratsbehälter können, bei entsprechender Dimensionierung und sonstiger Abstimmung der konstruktiven Details, auf diese Weise beide die als Schraubenfeder ausgeführte Feder und/oder den in deren Innenraum angeordneten Stoßdämpfer umgeben.

## Patentansprüche

1. Kraftfahrzeug-Fahrgestell, umfassend eine Basisstruktur (1), zwei mit dieser über jeweils eine Vorderradaufhängung verbundene Vorderräder und zwei mit dieser über jeweils eine Hinterradaufhängung verbundene Hinterräder, wobei jede der beiden Vorderradaufhängungen mindestens eine dem betreffenden Rad zugeordnete Feder und mindestens einen dem betreffenden Rad zugeordneten Stoßdämpfer in einer ersten Feder-Stoßdämpfer-Anordnung, bei der jeweils der Stoßdämpfer innerhalb der als Schraubenfeder ausgeführten Feder angeordnet ist, und jede der beiden Hinterradaufhängungen mindestens eine dem betreffenden Rad zugeordnete Feder (3) und mindestens einen dem betreffenden Rad zugeordneten Stoßdämpfer in einer zweiten Feder-Stoßdämpfer-Anordnung, bei der jeweils der Stoßdämpfer außerhalb der als Schraubenfeder ausgeführten Feder angeordnet ist, aufweist, mit den folgenden Merkmalen:
sämtlichen vier Radaufhängungen ist jeweils eine hydraulische Höhen-Verstelleinrichtung mit einer auf einen Fußpunkt (4) der betreffenden Feder (3) einwirkenden Zylinder-Kolben-Anordnung (20) zugeordnet;
die Zylinder-Kolben-Anordnung (20) ist jeweils von einem dem betreffenden Rad zugeordneten dezentralen, jeweils eine durch einen Elektromotor (22) angetriebene Hydraulikpumpe (25) umfassenden Hydraulikaggregat (21) beaufschlagbar;
jede hydraulische Höhen-Verstelleinrichtung umfasst eine komplexe, integrierte, das jeweilige Hydraulikaggregat (21) und die zugeordnete Zylinder-Kolben-Anordnung (20) umfassende elektro-hydraulische Verstell-Baugruppe (5) mit einem spezifischen Adapter (6), in welchen die jeweilige Zylinder-Kolben-Anordnung (20) dergestalt integriert ist, dass zwischen der jeweiligen Hydraulikpumpe (25) und der zugeordneten Zylinder-Kolben-Anordnung (20) keinerlei freiliegende Hydraulikleitungen existieren;
die Zylinder-Kolben-Anordnung (20) umfasst jeweils einen ringförmigen hydraulischen Arbeitsraum (18);
zu dem ringförmigen hydraulischen Arbeitsraum (18) der Zylinder-Kolben-Anordnung (20) axial versetzt ist ein sein Volumen gegenläufig zum ringförmigen Arbeitsraum (18) verändernder ringförmiger Hydraulikflüssigkeits-Vorratsbehälter (19) angeordnet;
die hydraulischen Höhen-Verstelleinrichtungen der Vorderräder und die hydraulischen Höhen-Verstelleinrichtungen der Hinterräder unterscheiden sich hinsichtlich der Adapter (6) dergestalt, dass bei der ersten Feder-Stoßdämpfer-Anordnung das Hydraulikaggregat (21) außerhalb der Schraubenfeder und bei der zweiten Feder-Stoßdämpfer-Anordnung zumindest der Elektromotor (22) des Hydraulikaggregats (21) innerhalb der Feder (3) angeordnet ist;
mit Ausnahme des jeweiligen Adapters (6) sind die hydraulischen Höhen-Verstelleinrichtungen der Vorderräder und die hydraulischen Höhen-Verstelleinrichtungen der Hinterräder indessen baugleich.

2. Kraftfahrzeug-Fahrgestell nach Anspruch 1, **dadurch gekennzeichnet, dass** jeweils in den Adapter (6) das Gehäuse der zugeordneten Hydraulikpumpe (25) dergestalt integriert ist, dass der Pumpenrotor (26) in einem in dem Adapter (6) ausgeführten Hohlraum rotiert.

3. Kraftfahrzeug-Fahrgestell nach Anspruch 1 oder Anspruch 2, **dadurch gekennzeichnet, dass** der Hydraulikflüssigkeits-Vorratsbehälter (19) jeweils in den Adapter (6) integriert ist.

4. Kraftfahrzeug-Fahrgestell nach einem der Ansprüche 1 bis 3, **dadurch gekennzeichnet, dass** die Adapter (6) der Vorderrad-Höhenverstelleinrichtungen und die Adapter der Hinterrad-Höhenverstelleinrichtungen jeweils einen einen Gehäuseabschnitt (11) und einen von diesem umschlossenen Adapterkern (12) umfassenden Grundkörper sowie einen relativ zu diesem bewegbaren Betätigungsabschnitt (8) umfassen, wobei die Adapterkerne (12) der Vorderrad-Höhenverstelleinrichtungen und der Hinterrad-Höhenverstelleinrichtungen baugleich sind.

5. Kraftfahrzeug-Fahrgestell nach einem der Ansprüche 1 bis 4, **dadurch gekennzeichnet, dass** bei der zweiten Feder-Stoßdämpfer-Anordnung jeweils ein hydraulischer Arbeitsraum (18) der Zylinder-Kolben-Anordnung (20) innerhalb der Feder (3) angeordnet ist.

6. Kraftfahrzeug-Fahrgestell nach einem der Ansprüche 1 bis 5, **dadurch gekennzeichnet, dass** bei der zweiten Feder-Stoßdämpfer-Anordnung jeweils ein Hydraulikflüssigkeits-Vorratsbehälter (19) innerhalb der Feder (3) angeordnet ist.

## Claims

1. A motor vehicle chassis comprising:
a basic structure (1),
two front wheels connected thereto via one front-wheel suspension each; and
two rear wheels connected thereto via one rear-wheel suspension each,
wherein each of the two front-wheel suspensions is provided at least with one spring associated with the wheel in question and at least one shock absorber associated with the wheel in question in a first spring-shock-absorber arrangement, in which respectively the shock absorber is disposed within the spring, which is constructed as a coil spring, and each of the two rear-wheel suspensions is provided at least with one spring (3) associated with the wheel in question and at least one shock absorber associated with the wheel in question in a second spring-shock-absorber arrangement, in which respectively the shock absorber is disposed outside the spring, which is constructed as a coil spring, with the following features:
respectively one hydraulic height-positioning device with a cylinder-piston arrangement (20) acting on a foot point (4) of the spring (3) in question is associated with all four wheel suspensions;
the cylinder-piston arrangement (20) can be pressurized respectively by a hydraulic aggregate (21) comprising a decentralized hydraulic pump (25) associated with the wheel in question and respectively driven by an electric motor (22);
each hydraulic height-positioning device comprises a complex, integrated electrohydraulic positioning assembly (5) comprising the respective hydraulic aggregate (21) and the associated cylinder-piston arrangement (20), with a specific adapter (6), in which the respective cylinder-piston arrangement (20) is integrated in such a way that no exposed hydraulic lines of any kind exist between the respective hydraulic pump (25) and the associated cylinder-piston arrangement (20);
the cylinder-piston arrangement (20) comprises respectively an annular hydraulic working chamber (18);
an annular hydraulic-fluid storage container (19) that changes its volume inversely relative to the annular working chamber (18) is disposed axially offset from the annular hydraulic working chamber (18) of the cylinder-piston arrangement (20);
the hydraulic height-positioning devices of the front wheels and the hydraulic height-positioning devices of the rear wheels differ with respect to the adapter (6) in such a way that, in the first spring-shock-absorber arrangement, the hydraulic aggregate (21) is disposed outside the coil spring and, in the second spring-shock-absorber arrangement, at least the electric motor (22) of the hydraulic aggregate (21) is disposed within the spring (3);
nevertheless, the hydraulic height-positioning devices of the front wheels and the hydraulic height-positioning devices of the rear wheels are identical in design, except for the respective adapter (6).

2. The motor vehicle chassis of claim 1, wherein the housing of the associated hydraulic pump (25) is respectively integrated in the adapter (6) in such a way that the pump rotor (26) rotates in a cavity constructed in the adapter (6).

3. The motor vehicle chassis of claim 1 or claim 2, wherein the hydraulic-fluid storage container (19) is respectively integrated in the adapter (6).

4. The motor vehicle chassis of one of the claims 1 to 3, wherein the adapters (6) of the front-wheel height-positioning devices and the adapters of the rear-wheel height-positioning devices respectively comprise a base member comprising a housing portion (11) and an adapter core (12) enclosed thereby, as well as an actuating portion (8), which is movable relative thereto, wherein the adapter cores (12) of the front-wheel height-positioning devices and of the rear-wheel height-positioning devices are identical in design.

5. The motor vehicle chassis of one of the claims 1 to 4, wherein the second spring-shock-absorber arrangement, a hydraulic working chamber (18) of the cylinder-piston arrangement (20) is respectively disposed within the spring (3).

6. The motor vehicle chassis of one of the claims 1 to 5, wherein, in the second spring-shock-absorber arrangement, a hydraulic-fluid storage container (19) is respectively disposed within the spring (3).

## Revendications

1. Châssis de véhicule automobile, comportant une structure de base (1), deux roues avant reliées à celle-ci respectivement par le biais d'une suspension de roue avant et deux roues arrière reliées à celle-ci respectivement par le biais d'une suspension de roue arrière, dans lequel chacune des deux suspensions de roue avant présente au moins ressort attribué à la roue en question et au moins un amortisseur attribué à la roue en question dans un premier ensemble ressort-amortisseur, dans lequel l'amortisseur est disposé respectivement à l'intérieur du ressort conçu comme un ressort hélicoïdal, et chacune des deux suspensions de roue arrière présente au moins un ressort (3) attribué à la roue en question et au moins un amortisseur attribué à la roue en question dans un deuxième ensemble ressort-amortisseur, dans lequel l'amortisseur est disposé respectivement à l'extérieur du ressort conçu comme un ressort hélicoïdal, **caractérisé en ce que** :
- un système de réglage hydraulique de la hauteur avec un ensemble cylindre-piston (20) agissant sur une base (4) de la roue en question (3) est attribué respectivement à chacune des quatre suspensions de roue ;
l'ensemble cylindre-piston (20) peut être sollicité respectivement par un groupe hydraulique (21) décentralisé, attribué à la roue en question et comportant respectivement une pompe hydraulique (25) entraînée par un moteur électrique (22) chaque système de réglage hydraulique de la hauteur comporte un module de réglage électro-hydraulique (5) complexe intégré, comportant le groupe hydraulique (21) respectif et l'ensemble cylindre-piston (20) correspondant, avec un adaptateur spécifique (6), dans lequel l'ensemble cylindre-piston (20) respectif est intégré de telle façon qu'il n'existe aucune conduite hydraulique exposée entre la pompe hydraulique (25) respective et l'ensemble cylindre-piston (20) correspondant ;
l'ensemble cylindre-piston (20) comporte respectivement un espace de travail hydraulique annulaire (18) ; un récipient de stockage de liquide hydraulique annulaire (19) modifiant son volume dans le sens inverse de l'espace de travail annulaire (18) est disposé de manière axialement décalée par rapport à l'espace de travail hydraulique annulaire (18) de l'ensemble cylindre-piston (20) ;
les systèmes de réglage hydrauliques de la hauteur des roues avant et les systèmes de réglage hydrauliques de la hauteur des roues arrière se différencient quant aux adaptateurs **en ce que** dans le premier ensemble ressort-amortisseur, le groupe hydraulique (21) est disposé à l'extérieur du ressort hélicoïdal et dans le deuxième ensemble ressort-amortisseur, au moins le moteur électrique (22) du groupe hydraulique (21) est disposé à l'intérieur du ressort (3) ;
à l'exception de l'adaptateur (6) respectif, les systèmes de réglage hydrauliques de la hauteur des roues avant et les systèmes de réglage hydrauliques de la hauteur des roues arrière sont construits de façon identique.

2. Châssis de véhicule automobile selon la revendication 1, **caractérisé en ce que** le boîtier de la pompe hydraulique (25) est intégré respectivement dans l'adaptateur (6) correspondant de telle façon que le rotor de pompe (26) tourne dans un espace creux réalisé dans l'adaptateur (6).

3. Châssis de véhicule automobile selon la revendication 1 ou la revendication 2, **caractérisé en ce que** le récipient de stockage de liquide hydraulique (19) est intégré respectivement dans l'adaptateur (6).

4. Châssis de véhicule automobile selon l'une des revendications 1 à 3, **caractérisé en ce que** les adaptateurs (6) des systèmes de réglage de la hauteur des roues avant et les adaptateurs des systèmes de réglage de la hauteur des roues arrière comportent respectivement un corps de base comportant une section de boiter (11) et un noyau d'adaptateur (12) entouré par celle-ci, ainsi qu'une section d'actionnement (8) déplaçable par rapport à celui-ci, les noyaux d'adaptateur (12) des systèmes de réglage de la hauteur des roues avant et des systèmes de réglage de la hauteur des roues arrière étant construits de façon identique.

5. Châssis de véhicule automobile selon l'une des revendications 1 à 4, **caractérisé en ce que** dans le deuxième ensemble ressort-amortisseur, un espace de travail hydraulique (18) de l'ensemble cylindre-piston (20) est disposé respectivement à l'intérieur du ressort (3).

6. Châssis de véhicule automobile selon l'une des revendications 1 à 5, **caractérisé en ce que** dans le deuxième ensemble ressort-amortisseur, un récipient de stockage de liquide hydraulique (19) est disposé respectivement à l'intérieur du ressort (3).
